# EUROPÄISCHE PATENTSCHRIFT

(11) **EP 0 843 617 B1**
(45) Veröffentlichungstag und Bekanntmachung des Hinweises auf die Patenterteilung: **17.05.2000**
(21) Anmeldenummer: 96928339.9
(22) Anmeldetag: 27.07.1996
(51) Int. Cl.: B29C 45/82, B29C 45/02

(54) **HYDRAULISCHE PRESSE ZUR UMHÜLLUNG VON HALBLEITERBAUELEMENTEN**
HYDRAULIC PRESS FOR ENCAPSULATING SEMICONDUCTOR COMPONENTS
PRESSE HYDRAULIQUE POUR ENCAPSULER DES COMPOSANTS A SEMI-CONDUCTEUR

(30) Priorität: 09.08.1995 DE 19529352
(43) Veröffentlichungstag der Anmeldung: 27.05.1998
(73) Patentinhaber: Maschinenfabrik Lauffer GmbH & Co. KG, 72160 Horb (DE)
(72) Erfinder: PLOCHER, Werner, D-72160 Horb (DE)
(74) Vertreter: Späth, Dieter, Dipl.-Ing.
(86) Internationale Anmeldenummer: DE9601403
(87) Internationale Veröffentlichungsnummer: WO9705997

(56) Entgegenhaltungen:
- EP-A- 0 201 959
- DE-A- 3 336 173
- DE-A- 4 227 692
- PATENT ABSTRACTS OF JAPAN vol. 012, no. 044 (E-581), 9.Februar 1988 & JP,A,62 195135 (NEC CORP), 27.August 1987,
- PATENT ABSTRACTS OF JAPAN vol. 013, no. 318 (M-852), 19.Juli 1989 & JP,A,01 103417 (FUJITSU LTD), 20.April 1989,
- PATENT ABSTRACTS OF JAPAN vol. 010, no. 244 (E-430), 22.August 1986 & JP,A,61 074343 (NEC CORP), 16.April 1986,
- PATENT ABSTRACTS OF JAPAN vol. 009, no. 159 (E-326), 4.Juli 1985 & JP,A,60 037134 (MITSUBISHI DENKI KK), 26.Februar 1985,

## Beschreibung

Die Erfindung betrifft eine Spritzgießmaschine zur Umhüllung von Halbleiterbauelementen gemäß Oberbegriff des Anspruchs 1.

Zur Umhüllung von Halbleiterbauelementen sind Spritzgießmaschinen bekannt, die mittels hydraulisch betätigten Spritzkolben eine erhitzte Kunststoffmasse in ein Spritzwerkzeug einspritzen, in welchem die zu umhüllenden Halbleiterbauelemente in mehreren Kavitäten, die auch als Formnester bezeichnet werden können, einliegen. Das erhitzte Kunststoffmaterial wird dabei über Kanäle mit hohem Druck in die Kavitäten eingespritzt. Der Spritzvorgang kann weggesteuert und/oder druckgesteuert erfolgen. Als "weggesteuert" versteht man dabei, daß die Bewegung des Spritzkolbens überwacht wird und dieser über eine vorgegebene Wegstrecke beim Spritzvorgang bewegt wird. Dadurch wird gewährleistet, daß eine entsprechende, vorgegebene Menge an Kunststoffmatrial in die Kavitäten eingespritzt wird.

Unter "druckgesteuert" versteht man dabei, daß ein vorgegebener Druck bzw. ein bestimmter Druckverlauf beim Spritzvorgang eingehalten wird. Dies hat den Vorteil, daß keine unzulässig hohen Drücke auftreten, jedoch kann dabei nicht immer gewährleistet werden, daß eine vorgegebene Menge von Kunststoffmaterial tatsächlich auch in die Kavitäten eingspritzt wird.

Aus dem Abstract der JP-A 62 195 135 ist eine Spritzgießmaschine mit mehreren Spritzkolben zur gleichzeitigen Herstellung mehrerer Kunststoffpreßteile bekannt, bei der die Spritzkolben von einem gemeinsamen Antrieb betätigt werden. Die Spritzkolben lassen sich gemeinsam mit unter Druck stehender Hydraulikflüssigkeit beaufschlagen, um ungefähr die letzten 10 % des Hubs unabhängig von den anderen Spritzkolben zurückzulegen.

Der Erfindung liegt die Aufgabe zugrunde, eine Spritzgießmaschine zur Umhüllung von Halbleiterbauelementen zu schaffen, bei der die im Werkzeug befindlichen Spritzkolben derart indirekt von einer Antriebseinheit betätigt werden, daß der Spritzvorgang hinsichtlich Druckverlauf oder weggesteuert außerhalb des Werkzeugs auf einfache Weise überwacht werden kann.

Die Lösung dieser Aufgabe erhält man durch die im Anspruch 1 angegebenen Merkmale. Ein außerhalb des Werkzeugs angeordneter, geregelter Antriebskolben bildet dabei zusammen mit einem oder mehreren weggesteuerten Zwischenkolben die Antriebseinheit für die Spritzkolben. Durch die erfindungsgemäße hydraulische Verbindung der Druckräume der Spritzkolben mit den Druckräumen der Zwischenkolben besteht die Möglichkeit, im Bereich der hydraulischen Verbindung Drucküberwachungseinrichtungen oder auch Druck- und Wege-Regeleinrichtungen anzuordnen. Die Anordnung dieser Einrichtungen außerhalb des Werkzeugs hat den großen Vorteil, daß die Einrichtungen den hohen Temperaturen, die im Werkzeug, wo sich die Spritzkolben befinden, nicht ausgesetzt sind. Die Anordnung der Regeleinrichtungen oder Überwachungseinrichtungen außerhalb des Werkzeugs hat auch den Vorteil, daß ein Werkzeugwechsel einfacher durchgeführt werden kann und daß zusätzliche Steuerleitungen zwischen Maschine und Werkzeug vermieden werden.

Die bevorzugte Ausführungsform sieht vor, daß die Zwischenkolben auf einem gemeinsamen Verbindungsteil angeordnet sind, welches mit dem Antriebskolben verbunden ist und von diesem weggesteuert in Achsrichtung bewegbar ist.

Auf diese Weise können beispielsweise sechs Zwischenkolben über Hydraulikleitungen mit sechs Spritzkolben eines Werkzeugs direkt in Verbindung stehen, so daß ein vorgegebener Hub des Arbeitskolbens und der mit ihm verbundenen Zwischenkolben eine ganz bestimmte Hydraulikölmenge in jeden Druckraum der Spritzkolben befördert, so daß exakt gleiche Wegstrecken von den Spritzkolben ausgeführt werden.

In vorteilhafter Weise können an jede Hydraulikleitung Druckgeber zur Drucküberwachung angeschlossen werden, um den Druckverlauf an jedem Spritzkolben während des Spritzvorganges überwachen zu können. Der Druckverlauf kann dann Aufschluß darüber geben, ob die Spritzkolben problemlos arbeiten und das Einspritzen der Kunststoffmasse in die Kavitäten ohne Störungen erfolgt ist.

Um am Ende eines Spritzvorganges ein korrektes und vollständiges Ausfüllen der Kavitäten zu gewährleisten, kann weiterhin vorgesehen sein, daß am Ende des weggesteuerten Arbeitshubs des Antriebskolbens die Spritzkolben jeweils noch druckgesteuert nachgedrückt werden.

Um reproduzierbare Spritzvorgänge ausführen zu können, ist es vorteilhaft die Spritzkolben nach jedem Spritzvorgang in eine definierte Ausgangsstellung zurückzuführen.

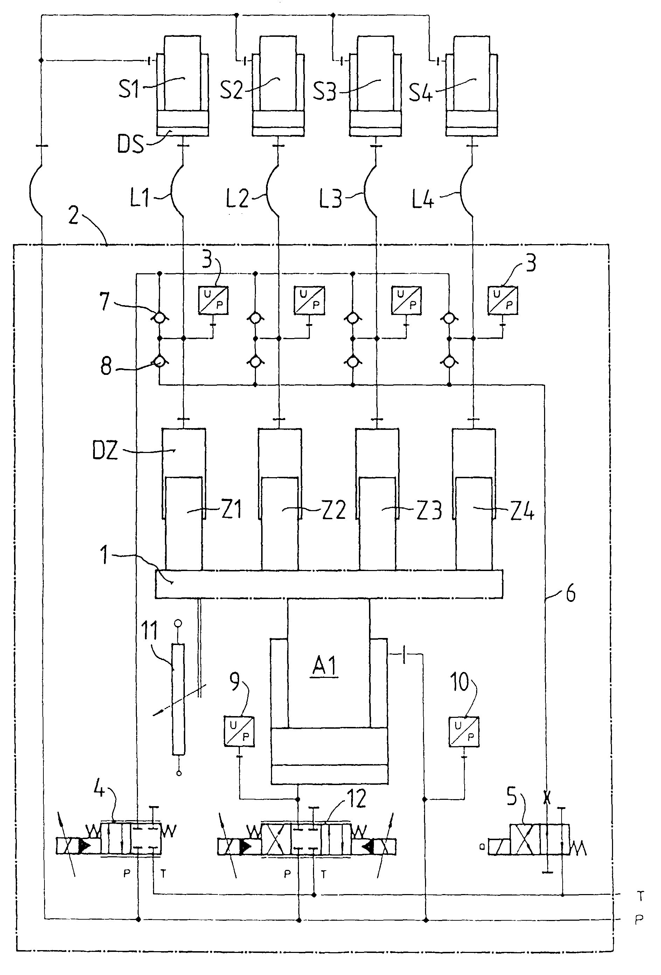

Die Erfindung wird nachfolgend anhand eines in der Zeichnung dargestellten Ausführungsbeispiels näher erläutert.

Zur Betätigung von vier Spritzkolben S1 bis S4, die sich in einem hier nicht dargestellten Werkzeug befinden, sind im Maschinenteil der Spritzgießmaschine vier Zwischenkolben Z1 bis Z4 angeordnet. Die Zwischenkolben Z1 bis Z4 sind über ein Verbindungsteil 1 mit dem Antriebskolben A1 eines Antriebszylinders verbunden.

Die Druckräume DS der Spritzkolben S1 bis S4 sind über Hydraulikleitungen L1 bis L4 mit den Druckräumen DZ der Zwischenkolben Z1 bis Z4 verbunden. An die Hydraulikleitungen L1 bis L4 sind im Maschinenteil der Spritzgießmaschine, der durch einen strichpunktierte Linie 2 umrahmt ist, Druckgeber 2 sowie steuerbare Ventile 4, 5 angeschlossen, die mit der Betriebsdruckleitung P und dem Ablauftank T in Verbindung stehen. Die Druckgeber 3 dienen zur Überwachung des Druckverlaufs während des Spritzvorganges. Das steuerbare Ventil 4 wird am Ende eines Spritzvorganges auf Durchlaß geschaltet, so daß die Spritzkolben S1 bis S4 drucküberwacht nachgedrückt werden. Der Arbeitskolben A1 bleibt dabei in seiner oberen Endstellung, bis das "Nachdrücken" der Spritzkolben S1 bis S4 abgeschlossen ist.

Durch Betätigung des Ventils 5 kann über die Leitung 6 Hydrauliköl zum Ablauftank T zurückfließen. Rückschlagventile 7, 8 gewährleisten dabei einen korrekten Hydraulikölfluß.

Der Arbeitskolben A1 ist weg- und druckgesteuert. Hierzu sind die Druckgeber 9, 10, ein Weggeber 11 und ein steuerbares Umschaltventil 12 vorgesehen.

Die vorliegende Erfindung ist nicht auf das in der Zeichnung dargestellen Ausführungsbeispiel mit vier Spritzkolben beschränkt, sondern es können ein oder beliebig viele Spritzkolben verwendet werden. Das Verbindungsteil 1 kann beispielsweise als langgestreckte Traverse oder als kreisförmige Scheibe ausgebildet sein.

Anstelle eines hydraulisch betätigten Antriebskolbens A1 kann auch ein elektromechanischer Antrieb vorgesehen sein.

## Patentansprüche

1. Spritzgießmaschine zur Umhüllung von Halbleiterbauelementen, mit einem Werkzeug mit einer oder mehreren Kavitäten, wobei den Kavitäten im Werkzeug befindliche Spritzkolben (S1 bis S4) zugeordnet sind, die von einem geregelten, hydraulischen oder elektromechanischen Antrieb beim Spritzvorgang betätigt werden, **dadurch gekennzeichnet**, daß der geregelte Antrieb (A1) einen oder mehrere weggesteuerte Zwischenkolben (Z1 bis Z4) betätigt, deren Druckräume (DZ) über Hydraulikleitungen (L1 bis L4) jeweils mit dem Druckraum (DS) eines zugeordneten Spritzkolbens (S1 bis S4) verbunden sind.

2. Spritzgießmaschine nach Anspruch 1, **dadurch gekennzeichnet**, daß die Zwischenkolben (Z1 bis Z4) auf einem gemeinsamen Verbindungsteil (1) angeordnet sind, welches mit dem Antriebskolben (1) verbunden ist und von diesem weggesteuert bewegbar ist.

3. Spritzgießmaschine nach einem der Ansprüche 1 oder 2, **dadurch gekennzeichnet**, daß an jede Hydraulikleitung (L1 bis L4) ein Druckgeber (3) zur Drucküberwachung angeschlossen ist.

4. Spritzgießmaschine nach einem der vorhergehenden Ansprüche, **dadurch gekennzeichnet**, daß zwischen einer Betriebsdruckleitung (P) und den Hydraulikleitungen (L1 bis L4) ein steuerbares Ventil (4) angeschlossen ist, das am Ende des Arbeitshubs des Antriebskolbens (A1) zum druckabhängigen Nachdrücken der Spritzkolben (S1 bis S4) geöffnet wird.

5. Spritzgießmaschine nach einem der vorhergehenden Ansprüche, **dadurch gekennzeichnet**, daß die Spritzkolben (S1 bis S4) nach jedem Spritzvorgang in eine definierte Ausgangsstellung zurückbewegt werden.

## Claims

1. An injection molding machine for sheathing semiconductor components, with a mold having one or more cavities, where injection rams (S1 through S4) located in the mold and provided for the cavities are operated by a controlled hydraulic or electromechanical drive in the injection process, characterized in that the controlled drive (A1) operates one or more path-controlled intermediate rams (Z1 through Z4) whose pressure spaces (DZ) are each connected to the pressure space (DS) of a respective injection ram (S1 through S4) by hydraulic lines (L1 through L4).

2. An injection molding machine according to Claim 1, characterized in that the intermediate rams (Z1 through Z4) are arranged on a common connecting part (1) which is connected to the driving ram (A1) and can be moved away from it in a path-controlled operation.

3. An injection molding machine according to one of Claims 1 or 2, characterized in that a pressure sensor (3) is connected to each hydraulic line (L1 through L4) to monitor the pressure.

4. An injection molding machine according to one of the preceding claims, characterized in that a controllable valve (4) connected between an operating pressure line (P) and the hydraulic lines (L1 through L4) is opened at the end of the working stroke of the driving ram (A1) to apply a pressure-dependent dwell pressure to the injection rams (S1 through S4).

5. An injection molding machine according to one of the preceding claims, characterized in that the injection rams (S1 through S4) are moved back into a defined starting position after each injection operation.

## Revendications

1. Presse d'injection pour enrobage de composants semiconducteurs et comprenant un outil qui présente une ou plusieurs cavités, des pistons d'injection (S1 à S4) se trouvant dans l'outil étant associés auxdites cavités, lesquels pistons sont actionnés lors de l'opération d'injection par une commande d'entraînement hydraulique ou électromécanique régulée, caractérisée en ce que la commande d'entraînement régulée (A1) actionne un ou plusieurs pistons intermédiaires (Z1 à Z4) commandés proportionnellement à la course, dont les chambres de compression (DZ) sont chacune en relation avec la chambre de compression (DS) d'un piston d'injection correspondant (S1 à S4), par l'intermédiaire d'une conduite hydraulique (L1 à L4).

2. Presse d'injection selon la revendication 1, caractérisée en ce que les pistons intermédiaires (Z1 à Z4) sont placés sur une pièce de liaison commune (1), qui est raccordée au piston d'entraînement (A1) et peut être mise en mouvement par ce dernier, proportionnellement à la course.

3. Presse d'injection selon l'une des revendications 1 à 2, caractérisée en ce qu'un capteur de pression (3) est raccordé à chacune des conduites hydrauliques (L1 à L4) pour surveiller la pression.

4. Presse d'injection selon l'une des revendications qui précèdent, caractérisée en ce qu'entre une conduite sous pression de service (P) et les conduites hydrauliques (L1 à L4), on a raccordé une soupape commandable (4) qui est ouverte à la fin de la course de travail du piston d'entraînement (A1) en vue d'une réapplication des pistons d'injection (S1 à S4) dépendante de la pression.

5. Presse d'injection selon l'une des revendications qui précèdent, caractérisée en ce que les pistons d'injection (S1 à S4) sont rappelés après chaque opération d'injection dans une position de départ définie.
